# FASCICULE DE BREVET EUROPEEN

(11) **EP 2 539 683 B1**
(45) Date de publication et mention de la délivrance du brevet: **08.04.2015**
(21) Numéro de dépôt: 11705568.1
(22) Date de dépôt: 25.02.2011
(51) Int. Cl.: B60W 30/10, G01M 17/02, G01M 17/06

(54) **PROCEDE D'ASSISTANCE A LA CONDUITE D'UN VEHICULE**
VERFAHREN FÜR EINE FAHRZEUGLENKHILFE
METHOD FOR VEHICLE DRIVING ASSISTANCE

(30) Priorité: 25.02.2010 FR 1051352
(43) Date de publication de la demande: 02.01.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: MARTIN, Denis, F-63000 Clermont-Ferrand (FR); BUISSON, Jérémy, F-63450 Saint-Saturnin (FR)
(74) Mandataire: Lasson, Cédric Y. M.
(86) Numéro de dépôt international: PCT/EP2011/052823
(87) Numéro de publication internationale: WO 2011/104348

(56) Documents cités:
- EP-A1- 2 085 274
- EP-A2- 1 411 343
- DE-A1- 10 154 591
- DE-A1-102006 026 436
- FR-A1- 2 902 909
- YOUNG R N ET AL: "ROAD SURFACE ROUGHNESS AND TYRE PERFORMANCE", JOURNAL OF TERRAMECHANICS, PERGAMON PRESS, HEADINGTON HILL HALL, OXFORD, GB, vol. 27, no. 3, 1 janvier 1990 (1990-01-01), pages 219-229, XP001150062, ISSN: 0022-4898, DOI: DOI:10.1016/0022-4898(90)90013-C
- PERSSON B N J: "THEORY OF RUBBER FRICTION AND CONTACT MECHANICS", JOURNAL OF CHEMICAL PHYSICS, AMERICAN INSTITUTE OF PHYSICS, NEW YORK, NY, US, vol. 115, no. 8, 22 août 2001 (2001-08-22) , pages 3840-3861, XP008021245, ISSN: 0021-9606, DOI: DOI:10.1063/1.1388626

## Description

### DOMAINE DE L'INVENTION

La présente invention concerne un procédé d'assistance à la conduite d'un véhicule sur une piste.

Le procédé de l'invention trouve notamment des applications dans l'évaluation des performances des pneumatiques équipant un véhicule de tourisme, une moto ou un poids lourd.

### ETAT DE LA TECHNIQUE

D'ici quelques années, l'étiquetage des performances des pneumatiques sera obligatoire. Il sera ainsi plus facile à un client de comparer la qualité des pneumatiques fabriqués par les différents manufacturiers.

Trois performances pourront être affichées. Ces performances concernent l'adhérence sur un sol mouillé, la résistance au roulement (qui conditionne la consommation en carburant du véhicule) et le niveau d'émission du bruit en roulage. Il est ainsi prévu d'afficher pour la résistance au roulement et l'adhérence sur un sol mouillé une note comprise entre A et G, où A correspond à niveau de performance élevé du pneumatique et G à un niveau de performance faible du pneumatique. Il est également prévu de mentionner la performance du pneu en terme de bruit émis, par un symbole représentant un pneu avec un haut parleur et un ou plusieurs fronts d'ondes lorsque le bruit ne dépasse pas, par exemple, les 70 décibels.

Chaque pneumatique appartient à un type de pneumatique et les pneumatiques d'un même type ont les mêmes niveaux de performances. A chaque type de pneumatique est associé un marquage particulier qui est présent sur les flancs des pneumatiques (par exemple un marquage DOT (pour Department Of Transportation en anglais)). Ainsi, les pneumatiques d'un même type ont le même marquage.

Pour déterminer le niveau de performance d'un type de pneumatique, il est possible de réaliser des tests sur une piste d'essai.

Le déroulement d'un test, par exemple un test de freinage, peut être le suivant : on équipe un véhicule de tourisme avec quatre pneumatiques de même type, un conducteur fait rouler la voiture sur la piste à une certaine vitesse, le conducteur freine et on mesure la distance parcourue par le véhicule entre deux seuils de vitesse, par exemple entre 80 km/h et 20 km/h. On compare cette distance mesurée avec une distance de référence. Cette distance de référence correspond à la distance de freinage d'un véhicule équipé de 4 pneumatiques de référence, par exemple quatre pneumatiques SRTT (pour Standard Reference Test Tyre en anglais). En fonction du résultat de la comparaison, il est ainsi possible de déterminer la performance d'adhérence du pneumatique testé. Une note entre A et G est alors attribuée au pneumatique en fonction de sa performance d'adhérence.

Généralement, les moyens pour mesurer les distances de freinage sont présents sur une partie déterminée de la piste. Cette partie de la piste peut être divisée en une pluralité de bandes adjacentes disposées dans la largeur de la piste. Chaque bande peut avoir une longueur de l'ordre de 50 mètres et une largeur de l'ordre de 30 cm. On notera que les bandes ne sont pas nécessairement délimitées physiquement sur la piste. En effet, cette division de la piste en bandes adjacentes peut être uniquement théorique et être réalisée, par exemple, par des moyens de traitement de type moyens logiciels.

Au cours du test, chaque pneumatique freine sur une bande. Généralement le freinage est rectiligne et les pneumatiques avant gauche et arrière gauche freinent sur la même bande. De la même manière, le pneumatique avant droit et le pneumatique arrière droit freinent sur la même bande.

En freinant, les pneumatiques usent le revêtement des bandes de la piste. Ceci peut modifier à terme l'adhérence des pneumatiques sur ces bandes.

L'adhérence d'un pneumatique sur une bande correspond ici à un rapport d'une force tangentielle (c'est-à-dire une force exercée par le pneumatique parallèlement à la bande et selon l'axe de déplacement du véhicule) à une charge appliquée sur le pneumatique (c'est-à-dire une force exercée perpendiculairement par rapport à la bande selon un axe vertical).

Il est possible de faire un grand nombre de tests sur une piste. Ainsi, si un véhicule roule toujours selon une même trajectoire prédéterminée, ce sont toujours les mêmes bandes de la piste qui sont usées. A terme, il peut y avoir une grande différence d'adhérence, pour un même type de pneumatique, entre des bandes usées sur lesquelles de nombreux tests de freinage ont été effectués et des bandes moins usées. Ainsi, en fonction de la zone de freinage (freinage sur une bande usée ou freinage sur une bande moins usée), il peut y avoir une différence dans l'évaluation des distances de freinage. De tel tests sont décrits dans DE 10154591, DE 102006026436 et EP 2085 274.

Il existe donc un besoin de proposer un procédé d'assistance à la conduite d'un véhicule pour limiter les effets de l'usure de la piste sur l'évaluation des performances des pneumatiques.

### BREVE DESCRIPTION DE L'INVENTION

L'invention concerne un procédé d'assistance à la conduite d'un véhicule au cours d'un test de freinage dudit véhicule sur une piste, ladite piste étant divisée en une pluralité de bandes adjacentes s'étendant principalement dans la longueur de la piste, la largeur de chaque bande étant supérieure ou égale à la largeur des pneumatiques du véhicule, chaque bande s'usant à chaque freinage du véhicule sur ladite bande. Le procédé d'assistance comporte une étape de sélection d'au moins une bande parmi la pluralité de bandes de la piste, ladite bande étant sélectionnée en fonction de son usure, une étape de détermination d'une trajectoire théorique du véhicule, de sorte qu'en suivant ladite trajectoire théorique le véhicule est apte à freiner sur la bande sélectionnée.

Pour un premier test de freinage, on peut ainsi déterminer une première trajectoire théorique. Ainsi, une ou des première(s) bandes de la piste sont usées par le freinage du véhicule.

Pour un second test de freinage, on peut déterminer une seconde trajectoire théorique différente de la première trajectoire théorique. Une ou des seconde(s) bandes de la piste sont alors usées par le freinage du véhicule.

Ainsi, on maîtrise l'usure de la piste. L'évaluation des performances des pneumatiques est alors améliorée.

Pour une première catégorie de test, le véhicule est une moto et la bande sélectionnée est la bande la moins usée parmi la pluralité de bandes de la piste.

Pour une seconde catégorie de test, le véhicule est un véhicule de tourisme et préalablement à l'étape de sélection on détermine des couples de bandes de sorte que deux bandes d'un même couple de bandes sont espacées l'une de l'autre d'une distance correspondant à la distance entre deux pneumatiques d'un même essieu du véhiculé. Pour chaque couple de bandes, on détermine une usure du couple de bandes correspondant à la moyenne des usures des bandes dudit couple et dans l'étape de sélection, on sélectionne le couple de bandes qui est le moins usé parmi la pluralité de couples de bandes.

Préférentiellement, le procédé comprend une étape d'indication de la trajectoire théorique à suivre par un conducteur du véhicule.

Préférentiellement, le procédé d'assistance comprend une étape de comparaison d'une trajectoire réellement suivie par le véhicule avec la trajectoire théorique, pour la validation du test de freinage.

La validation ou non du test est ainsi automatisée. Dans l'art antérieur, cette validation était assurée de manière subjective par le conducteur ce qui pouvait entraîner des erreurs d'interprétation. Ainsi, des tests valides pouvaient être considérés comme non valides par le conducteur et inversement des tests non valides pouvaient être considérés comme valides par ledit conducteur. L'invention rend plus robuste la validation du test de freinage ce qui améliore l'évaluation des performances des pneumatiques.

Un autre objet de l'invention concerne un dispositif d'assistance à la conduite d'un véhicule automobile au cours d'un test de freinage sur une piste.

Un autre objet de l'invention concerne un programme d'ordinateur pour l'assistance à la conduite d'un véhicule au cours d'un test de freinage sur une piste.

L'invention concerne également l'utilisation du procédé d'assistance à la conduite d'un véhicule pour la gestion de l'état d'une piste sur laquelle des tests de freinage d'un véhicule sont réalisés.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 représente une vue schématique partielle d'une piste sur laquelle on effectue des tests de freinage ;
- la figure 2 représente un organigramme des étapes d'un procédé d'assistance à la conduite d'un véhicule sur la piste de la figure 1 ;
- la figure 3 représente un dispositif d'assistance à la conduite d'un véhicule pour la mise en oeuvre du procédé d'assistance de la figure 2.

Dans la description qui va suivre, des éléments sensiblement identiques ou similaires seront désignés par des références identiques.

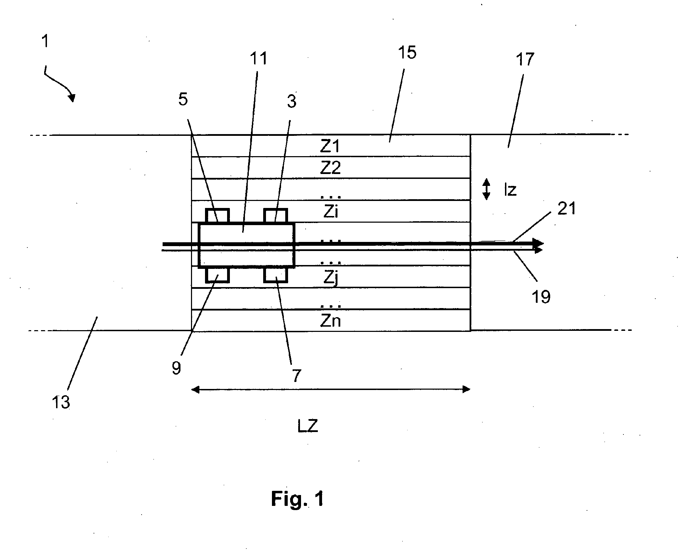

La figure 1 présente une vue schématique partielle d'un exemple d'une piste 1 sur laquelle peuvent être effectués des tests de freinage d'un véhicule 11. Le véhicule 11 peut être un véhicule de tourisme, un poids lourd, une moto ou un véhicule analytique, c'est-à-dire un véhicule de tourisme ou un poids lourd équipé d'une remorque comprenant des instruments de test.

Les pneumatiques 3, 5, 7, 9 du véhicule 11 appartiennent ici à un même type de pneumatique. Les pneumatiques d'un même type ont les mêmes niveaux de performances. A chaque type de pneumatique est associé un marquage particulier présent sur un flanc de pneumatique (par exemple un marquage DOT (pour Department Of Transportation en anglais). Ainsi, les pneumatiques d'un même type ont le même marquage.

Dans une variante de réalisation, il est possible que les pneumatiques situés à l'avant du véhicule appartiennent à un premier type de pneumatique et les pneumatiques situés à l'arrière du véhicule appartiennent à un second type de pneumatique différent du premier type de pneumatique.

Dans une autre variante de réalisation, le véhicule peut comprendre des pneumatiques appartenant à quatre types de pneumatique différents.

La piste 1 comprend une partie d'accélération 13 sur laquelle le véhicule 11 peut prendre de la vitesse. La piste 1 comprend également une partie de test 15 sur laquelle le véhicule vient freiner. Enfin la piste 1 comprend une partie de retour 17 pour permettre un retour du véhicule 11 sur la partie d'accélération 13 et sur la partie de test 15 en vue d'effectuer un autre test de freinage.

La partie de test 15 comporte un revêtement déterminé c'est-à-dire un revêtement comportant une macrotexture déterminée et une microtexture déterminée. Il est possible par exemple d'utiliser un revêtement de type béton poli présentant une macrotexture lisse et une microtexture lisse ou un revêtement de type tapis de sable présentant une macrotexture lisse et une microtexture rugueuse, ou bien encore un revêtement BBTM (pour Béton Bitumeux Très Mince) présentant une macrotexture rugueuse et une microtexture plus ou moins rugueuse. En fonction du type de revêtement utilisé, il est possible de recréer certaines conditions de freinage, par exemple des conditions de freinage sur un sol mouillé.

La figure 1 présente une seule partie de test 15. Bien entendu, la piste 1 peut comporter plusieurs parties de test, chacune de ces parties de test pouvant avoir un revêtement différent. Il est ainsi possible de tester les performances des pneumatiques 3, 5, 7, 9 sur plusieurs types de revêtement.

La partie de test 15 comprend une pluralité de bandes adjacentes Z1, Z2, ..., Zi, ..., Zj, ..., Zn, avec 1 ≤ i < j ≤ n et n un entier quelconque. Par bande, on entend une zone de roulement ayant une forme globalement rectangulaire.

Les bandes adjacentes s'étendent principalement dans la longueur de la piste et la largeur de chaque bande est supérieure ou égale à la largeur des pneumatiques du véhicule. A titre d'exemple, la longueur Lz de chaque bande est de l'ordre de 50 mètres et la largeur lz de chaque bande est d'environ 30 cm. Bien entendu, il est possible d'adapter au mieux la largeur des bandes à la largeur des pneumatiques testés.

Au cours d'un test de freinage, le véhicule suit une trajectoire 19 et roule sur certaines bandes de la piste. Dans l'exemple représenté à la figure 1, le véhicule roule sur une première bande Zi et sur une seconde bande Zj.

On vient freiner le véhicule 1 lorsque celui-ci est dans la partie de test 15. Généralement le freinage du véhicule 1 est rectiligne et le pneumatique avant gauche 3 et le pneumatique arrière gauche 5 freinent sur la même bande, ici la première bande Zi. De la même manière, le pneumatique avant droit 7 et le pneumatique arrière droit 9 freinent sur la même seconde bande, ici la seconde bande Zj.

Lors du freinage, les pneumatiques 3, 5, 7, 9 viennent user par frottement les bandes Zi, Zj. Par exemple, si le revêtement de la partie de test 15 comprend des cailloux qui dépassent par rapport à la surface des bandes, le freinage du véhicule 1 entraîne un polissage desdits cailloux. Les bandes Zi, Zj deviennent alors plus lisses ce qui diminue l'adhérence entre les pneumatiques du véhicule 1 et les bandes Zi, Zj lors de nouveaux tests de freinage.

L'adhérence d'un pneumatique sur une bande correspond ici à un rapport d'une force tangentielle (c'est-à-dire une force exercée par le pneumatique parallèlement à la bande et selon l'axe de déplacement du véhicule) à une charge appliquée sur le pneumatique (c'est-à-dire une force exercée perpendiculairement par rapport à la bande selon un axe vertical).

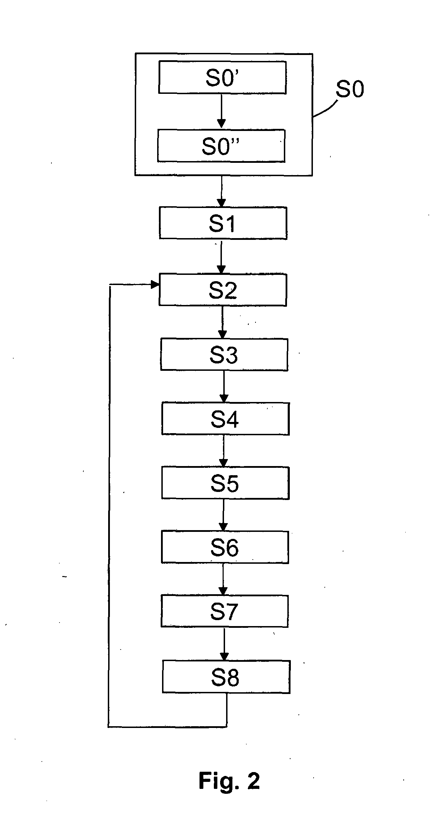

La figure 2 représente un organigramme des étapes d'un procédé d'assistance à la conduite d'un véhicule de tourisme.

Le procédé d'assistance comprend une étape S0 de détermination de l'usure pour chaque bande Z1, Z2, ..., Zi, ..., Zj, ..., Zn de la piste. Cette étape de détermination S0 comprend une sous-étape S0' de mesure de valeurs d'adhérence en différents points d'une même bande et une sous-étape S0" de traitement statistique des valeurs d'adhérences ainsi mesurées.

La sous-étape S0' de mesure de valeurs d'adhérence est ici réalisée à l'aide d'un appareil de mesure d'adhérence, par un exemple un appareil de type « Griptester » et à la sous-étape S0" on calcule la moyenne des valeurs d'adhérence des différents points d'une même bande. Cette moyenne ainsi calculée correspond à l'usure de la bande. Ainsi, plus la moyenne des valeurs d'adhérence est grande, moins la bande est usée. Inversement, plus la moyenne des valeurs d'adhérence est faible, plus la bande est usée.

Cette étape S0 de détermination de l'usure peut être effectuée périodiquement dans le temps. Dans une variante de réalisation, l'usure de chaque bande Z1, Z2, ..., Zi, ..., Zj, ..., Zn est connue et l'étape S0 de détermination n'est pas nécessaire.

Le procédé d'assistance comprend également une étape S1 de détermination de couples de bandes de sorte que deux bandes d'un même couple de bandes sont espacées l'une de l'autre d'une distance correspondant à la distance entre deux pneumatiques d'un même essieu du véhicule de tourisme.

Le procédé d'assistance comprend en outre une étape S2 de détermination d'une usure pour chaque couple de bandes correspondant à la moyenne des usures des bandes dudit couple.

Le procédé d'assistance comprend ensuite une étape S3 de sélection du couple de bandes qui est le moins usé parmi la pluralité de couples de bandes. Dans l'exemple de la figure 1, le couple de bandes sélectionné comprend la bande Zi et la bande Zj.

Dans une étape S4, on détermine une trajectoire théorique 21 du véhicule de sorte qu'en suivant cette trajectoire théorique, le véhicule roule sur les bandes Zi et Zj.

Dans une étape S5, on indique au conducteur la trajectoire théorique à suivre.

Dans une étape S6, le véhicule freine sur les bandes Zi et Zj et dans un étape S7, on compare la trajectoire 19 réellement suivie par le véhicule avec la trajectoire théorique 21 en vue de valider ou non le test de freinage.

Le procédé d'assistance peut comprendre également une étape S8 de mise à jour de l'usure des bandes Zi, Zj pour tenir compte des effets du freinage sur ces bandes.

On notera qu'il est possible de répéter les étapes S2 à S8 à chaque test de freinage.

Bien entendu, il est possible de conserver une trajectoire théorique identique 21 pour plusieurs tests de freinage successifs. Dans ces conditions, seules les étapes S5 à S8 sont répétées.

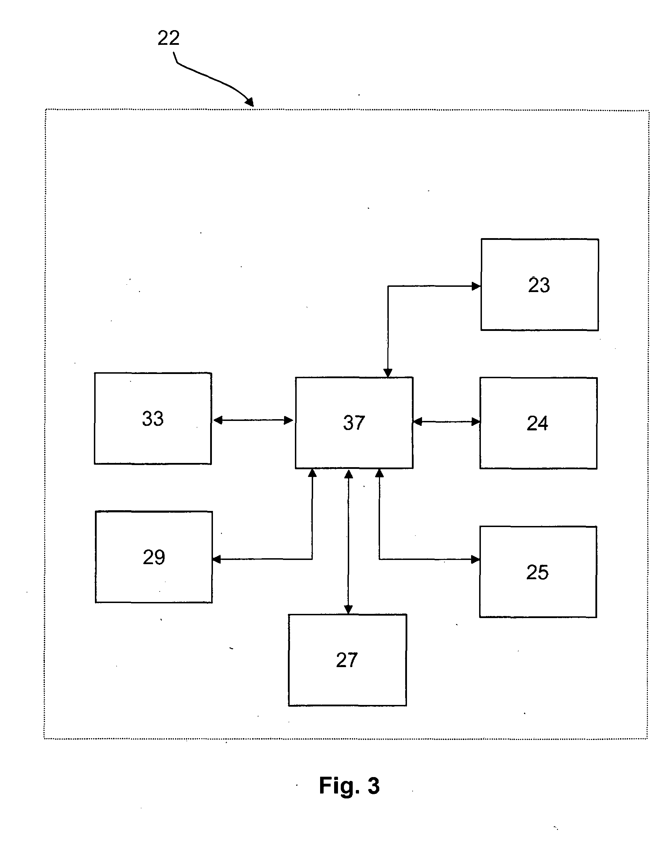

On va maintenant décrire, en référence à la figure 3, un dispositif 22 d'assistance à la conduite d'un véhicule.

Le dispositif d'assistance comprend :
- un module 23 de détermination de couples de bandes ;
- un module 24 de détermination d'une usure pour chaque couple de bandes ;
- un module 25 de sélection d'un couple de bandes Zi, Zj ;
- un module 27 de détermination d'une trajectoire théorique 21 ;
- un module 29 d'indication de la trajectoire théorique 21;
- un module 33 de comparaison entre le trajectoire théorique 21 et la trajectoire 19 réellement suivie par le véhicule ;
- une unité de commande 37.

Le module 23 est apte à déterminer des couples de bandes de sorte que deux bandes d'un même couple sont espacées l'une de l'autre d'une distance correspondant à la distance entre deux pneumatiques d'un même essieu du véhicule. Cette détermination est effectuée à partir de données concernant le véhicule qui sont stockées dans le module 23.

Le module 24 est adapté pour déterminer une usure pour chaque couple de bandes. Cette usure correspond ici à la moyenne des usures des deux bandes appartenant au couple de bandes.

Le module 25 est adapté pour sélectionner le couple de bandes qui est le moins usé parmi la pluralité de couples de bandes.

Le module 27 est adapté pour déterminer la trajectoire théorique 21 en fonction des bandes Zi, Zj du couple de bandes sélectionné. La trajectoire théorique 21 est ainsi déterminée à partir de données de cartographie des différentes bandes de la piste stockées dans le module 27.

Le module 29 est adapté pour indiquer la trajectoire théorique à suivre par le conducteur. Ce module d'indication 29 comporte par exemple un GPS (pour « Global Positioning System » en Anglais) permettant de donner à chaque instant la position du véhicule. En comparant, cette position GPS avec la trajectoire théorique 21 il est possible de déterminer si le véhicule dévie ou non de ladite trajectoire théorique. Le GPS est par exemple compatible avec la technologie RTK (pour « Real Time Kinematic » en Anglais). Le module d'indication 29 peut comprendre également un écran d'affichage et/ou un haut-parleur pour indiquer de manière visuelle ou auditive la trajectoire théorique que doit suivre à chaque instant le conducteur.

Le module 33 est apte à comparer la trajectoire réellement suivie par le véhicule avec la trajectoire théorique une fois le freinage réalisé.

L'unité de commande 37 est connectée au module 23 de détermination de couples de bandes, au module 24 de détermination d'une usure pour chaque couple de bandes, au module 25 de sélection d'un couple de bandes, au module 27 de détermination d'une trajectoire théorique, au module 29 d'indication de la trajectoire théorique, au module 33 de comparaison de trajectoires.

L'unité de commande 37 a pour rôle de contrôler le fonctionnement de ces différents modules 23, 24, 25, 27, 29, 33.

Dans l'exemple décrit ici, les modules 23, 24, 25, 27, 29, 33 sont des moyens logiciels. L'invention concerne donc aussi un programme d'ordinateur comportant des instructions pour la mise en oeuvre d'un procédé d'assistance à la conduite mise en oeuvre par le dispositif d'assistance 22 lorsque le programme est exécuté par un processeur présent dans l'unité de commande 37. Ce programme peut être stocké dans ou transmis par un support d'informations. Celui-ci peut être un support matériel de stockage, par exemple un CD-ROM, une disquette magnétique ou un disque dur, ou bien un support transmissible tel qu'un signal électrique, optique ou radio.

On notera que le véhicule comporte également des moyens de freinage pour freiner le véhicule sur les bandes sélectionnées.

Ces moyens de freinage peuvent être actionnés directement par le conducteur du véhicule. Dans une variante de réalisation, ces moyens de freinage peuvent être actionnés automatiquement par l'unité de commande 37.

L'invention concerne également l'utilisation du procédé d'assistance décrit ci-dessus pour la gestion de l'état de la piste sur laquelle des tests de freinage sont réalisés. Une partie de ce procédé d'assistance peut être mise en oeuvre dans un centre de contrôle gérant l'exploitation de plusieurs pistes. Ainsi, l'étape de détermination de la trajectoire théorique peut être réalisée dans un tel centre de contrôle. Les caractéristiques de la trajectoire théorique peuvent être ensuite transmises au véhicule se trouvant sur la piste. Cette transmission peut se faire, par exemple, par un signal électrique, optique ou radio.

## Revendications

1. Procédé d'assistance à la conduite d'un véhicule (11) au cours d'un test de freinage dudit véhicule sur une piste (1), ladite piste étant divisée en une pluralité de bandes adjacentes (Z1, ..., Zn) s'étendant principalement dans la longueur de la piste, la largeur (lz) de chaque bande étant supérieure ou égale à la largeur des pneumatiques (3, 5, 7, 9) du véhicule, chaque bande s'usant à chaque freinage du véhicule sur ladite bande, ledit procédé d'assistance comportant :
- une étape de sélection (S3) d'au moins une bande parmi la pluralité de bandes de la piste, ladite bande étant sélectionnée en fonction de son usure ;
- une étape de détermination (S4) d'une trajectoire théorique (21) du véhicule, de sorte qu'en suivant ladite trajectoire théorique le véhicule est apte à freiner sur la bande sélectionnée.

2. Procédé d'assistance selon la revendication 1 dans lequel le véhicule est une moto et la bande sélectionnée est la bande la moins usée parmi la pluralité de bandes de la piste.

3. Procédé d'assistance selon la revendication 1 dans lequel le véhicule est un véhicule de tourisme et préalablement à l'étape de sélection (S3) on détermine des couples de bandes de sorte que deux bandes d'un même couple de bandes sont espacées l'une de l'autre d'une distance correspondant à la distance entre deux pneumatiques d'un même essieu du véhicule, pour chaque couple de bandes on détermine une usure du couple de bandes correspondant à la moyenne des usures des bandes dudit couple et dans l'étape de sélection (S3), on sélectionne le couple de bandes qui est le moins usé parmi la pluralité de couples de bandes.

4. Procédé d'assistance selon l'une quelconque des revendications précédentes dans lequel ledit procédé comprend une étape (S5) d'indication de la trajectoire théorique (21) à suivre par un conducteur du véhicule.

5. Procédé d'assistance selon l'une quelconque des revendications 1 à 4, ledit procédé comprenant une étape (S7) de comparaison d'une trajectoire (19) réellement suivie par le véhicule avec la trajectoire théorique (21), pour la validation du test de freinage.

6. Dispositif d'assistance à la conduite d'un véhicule (11) au cours d'un test de freinage dudit véhicule sur une piste (1), ladite piste étant divisée en une pluralité de bandes adjacentes (Z1, ..., Zn) s'étendant principalement dans la longueur de la piste, la largeur (lz) de chaque bande étant supérieure ou égale à la largeur des pneumatiques (3, 5, 7, 9) du véhicule, chaque bande s'usant à chaque freinage du véhicule sur ladite bande, ledit dispositif d'assistance comportant :
- des moyens de sélection (25) d'au moins une bande parmi la pluralité de bandes de la piste, ladite bande étant sélectionnée en fonction de son usure;
- des moyens de détermination (27) d'une trajectoire théorique (21) du véhicule, de sorte qu'en suivant ladite trajectoire théorique le véhicule est apte à freiner sur la bande sélectionnée.

7. Programme d'ordinateur pour l'assistance à la conduite d'un véhicule (11) au cours d'un test de freinage dudit véhicule sur une piste (1), ladite piste étant divisée en une pluralité de bandes adjacentes (Z1, ..., Zn) s'étendant principalement dans la longueur de la piste, la largeur (lz) de chaque bande étant supérieure ou égale à la largeur des pneumatiques (3, 5, 7, 9) du véhicule, chaque bande s'usant à chaque freinage du véhicule sur ladite bande, ledit programme d'ordinateur comprenant des instructions pour la mise en oeuvre des étapes suivantes :
- une étape de sélection (S3) d'au moins une bande parmi la pluralité de bandes de la piste, ladite bande étant sélectionnée en fonction de son usure ;
- une étape de détermination (S4) d'une trajectoire théorique (21) du véhicule, de sorte qu'en suivant ladite trajectoire théorique le véhicule est apte à freiner sur la bande sélectionnée.

8. Utilisation du procédé d'assistance selon l'une quelconque des revendications 1 à 5 pour la gestion de l'état d'une piste sur laquelle des tests de freinage d'un véhicule sont réalisés.

## Patentansprüche

1. Assistenzverfahren beim Führen eines Fahrzeugs (11) während eines Bremstests des Fahrzeugs auf einer Fahrbahn (1), wobei die Fahrbahn in mehrere benachbarte Streifen (Z1, ..., Zn) unterteilt ist, die sich hauptsächlich längs der Fahrbahn erstrecken, wobei die Breite (lz) jedes Streifens größer oder gleich der Breite der Luftreifen (3, 5, 7, 9) des Fahrzeugs ist, wobei jeder Streifen bei jedem Bremsvorgang des Fahrzeugs auf dem Streifen verschleißt, wobei das Assistenzverfahren Folgendes umfasst:
- einen Schritt (S3) des Auswählens wenigstens eines Streifens unter den mehreren Streifen der Fahrbahn, wobei der Streifen als Funktion seines Verschleißes ausgewählt wird;
- einen Schritt (S4) des Bestimmens einer theoretischen Bahn (21) des Fahrzeugs, derart, dass das Fahrzeug dann, wenn es der theoretischen Bahn folgt, auf dem ausgewählten Streifen bremsen kann.

2. Assistenzverfahren nach Anspruch 1, wobei das Fahrzeug ein Kraftfahrzeug ist und der ausgewählte Streifen jener Streifen ist, der unter den mehreren Streifen der Fahrbahn am wenigstens verschleißt.

3. Assistenzverfahren nach Anspruch 1, wobei das Fahrzeug ein Mehrzweckfahrzeug ist und vor dem Auswahlschritt (S3) Paare von Streifen bestimmt werden, derart, dass zwei Streifen desselben Streifenpaars voneinander um eine Strecke beabstandet sind, die dem Abstand zwischen zwei Luftreifen derselben Achse des Fahrzeugs entsprechen, für jedes Streifenpaar ein Verschleiß des Streifenpaars bestimmt wird, der dem Mittelwert der Verschleiße der Streifen des Paars entspricht, und im Auswahlschritt (S3) das Streifenpaar, das unter den mehreren Streifenpaaren am wenigstens Verschleiß zeigt, gewählt wird.

4. Assistenzverfahren nach einem der vorhergehenden Ansprüche, wobei das Verfahren einen Schritt (S5) zum Angeben der theoretischen Bahn (21), der ein Fahrer des Fahrzeugs folgen soll, umfasst.

5. Assistenzverfahren nach einem der Ansprüche 1 bis 4, wobei das Verfahren einen Schritt (S7) des Vergleichens einer Bahn (19), der das Fahrzeug wirklich folgt, mit der theoretischen Bahn (21) umfasst, um den Bremstest für gültig zu erklären.

6. Assistenzvorrichtung beim Führen eines Fahrzeugs (11) während eines Bremstests des Fahrzeugs auf einer Fahrbahn (1), wobei die Fahrbahn in mehrere benachbarte Streifen (Z1, ... Zn) unterteilt ist, die sich hauptsächlich längs der Fahrbahn erstrecken, wobei die Breite (lz) jedes Streifens größer oder gleich der Breite der Luftreifen (3, 5, 7, 9) des Fahrzeugs ist, wobei jeder Streifen bei jedem Bremsvorgang des Fahrzeugs auf dem Streifen verschleißt, wobei die Unterstützungsvorrichtung Folgendes umfasst:
- Mittel (25) zum Auswählen wenigstens eines Streifens unter den mehreren Streifen der Fahrbahn, wobei der Streifen als Funktion seines Verschleißes ausgewählt wird;
- Mittel (27) zum Bestimmen einer theoretischen Bahn (21) des Fahrzeugs, derart, dass das Fahrzeug dann, wenn es der theoretischen Bahn folgt, auf dem ausgewählten Streifen bremsen kann.

7. Computerprogramm für die Unterstützung bei der Führung eines Fahrzeugs (11) während eines Bremstests des Fahrzeugs auf einer Fahrbahn (1), wobei die Fahrbahn in mehrere benachbarte Streifen (Z1, ..., Zn) unterteilt ist, die sich hauptsächlich längs der Fahrbahn erstrecken, wobei die Breite (lz) jedes Streifens größer oder gleich der Breite der Luftreifen (3, 5, 7, 9) des Fahrzeugs ist, wobei jeder Streifen bei jedem Bremsvorgang des Fahrzeugs auf dem Streifen verschleißt, wobei das Computerprogramm Befehle enthält, um die folgenden Schritte auszuführen:
- einen Schritt (S3) zum Auszählen wenigstens eines Streifens unter den mehreren Streifen der Fahrbahn, wobei der Streifen als Funktion seines Verschleißes ausgewählt wird;
- einen Schritt (S4) zum Bestimmen einer theoretischen Bahn (21) des Fahrzeugs, derart, dass das Fahrzeug dann, wenn es der theoretischen Bahn folgt, auf dem ausgewählten Streifen bremsen kann.

8. Verwendung des Assistenzverfahrens nach einem der Ansprüche 1 bis 5 für das Management des Zustands einer Fahrbahn, auf der Bremstests eines Fahrzeugs ausgeführt werden.

## Claims

1. Method for assisting in the driving of a vehicle (11) during a braking test on said vehicle on a track (1), said track being divided into a plurality of adjacent strips (Z1, ..., Zn) mainly extending lengthwise in the track, the width (lz) of each strip being greater than or equal to the width of the tyres (3, 5, 7, 9) of the vehicle, each strip being worn on each braking of the vehicle on said strip, said assistance method comprising:
- a step of selecting (S3) at least one strip out of the plurality of strips of the track, said strip being selected according to its wear;
- a step (S4) of determining a theoretical trajectory (21) of the vehicle, such that, by following said theoretical trajectory, the vehicle is able to brake on the selected strip.

2. Assistance method according to Claim 1, in which the vehicle is a motorcycle and the selected strip is the strip that is the least worn out of the plurality of strips of the track.

3. Assistance method according to Claim 1, in which the vehicle is a passenger vehicle and, prior to the selection step (S3), pairs of strips are determined such that two strips of one and the same pair of strips are spaced apart from one another by a distance corresponding to the distance between two tyres of one and the same axle of the vehicle, for each pair of strips, a wear of the pair of strips corresponding to the average of the wears of the strips of said pair is determined for each pair of strips and, in the selection step (S3), the pair of strips which is the least worn out of the plurality of pairs of strips is selected.

4. Assistance method according to any one of the preceding claims, in which said method comprises a step (S5) of indicating the theoretical trajectory (21) to be followed by a driver of the vehicle.

5. Assistance method according to any one of Claims 1 to 4, said method comprising a step (S7) of comparing a trajectory (19) actually followed by the vehicle with the theoretical trajectory (21), to validate the braking test.

6. Device for assisting in the driving of a vehicle (11) during a braking test on said vehicle on a track (1), said track being divided into a plurality of adjacent strips (Z1, ..., Zn) mainly extending lengthwise in the track, the width (lz) of each strip being greater than or equal to the width of the tyres (3, 5, 7, 9) of the vehicle, each strip being worn on each braking of the vehicle on said strip, said assistance device comprising:
- means for selecting (25) at least one strip out of the plurality of strips of the track, said strip being selected according to its wear;
- means for determining (27) a theoretical trajectory (21) of the vehicle, such that, by following said theoretical trajectory, the vehicle is able to brake on the selected strip.

7. Computer program for assisting in the driving of a vehicle (11) during a braking test on said vehicle on a track (1), said track being divided into a plurality of adjacent strips (Z1, ..., Zn) mainly extending lengthwise in the track, the width (lz) of each strip being greater than or equal to the width of the tyres (3, 5, 7, 9) of the vehicle, each strip being worn on each braking of the vehicle on said strip, said computer program comprising instructions for implementing the following steps:
- a step of selecting (S3) at least one strip out of the plurality of strips of the track, said strip being selected according to its wear;
- a step of determining (S4) a theoretical trajectory (21) of the vehicle, such that, by following said theoretical trajectory, the vehicle is able to brake on the selected strip.

8. Use of the assistance method according to any one of Claims 1 to 5 for the management of the state of a track on which braking tests on a vehicle are carried out.
